# EUROPÄISCHE PATENTANMELDUNG

(11) **EP 2 757 207 A1**
(43) Veröffentlichungstag der Anmeldung: **23.07.2014**
(21) Anmeldenummer: 14000174.4
(22) Anmeldetag: 17.01.2014
(51) Int. Cl.: E04B 1/76

(54) **Dämmstoff zum Einblasen in einem Hohlraum**

(30) Priorität: 17.01.2013 AT 332013
(71) Anmelder: Greber, Kaspar, 6870 Bezau (AT)
(72) Erfinder: Greber, Kaspar, 6870 Bezau (AT)
(74) Vertreter: Gangl, Markus

(57) **Zusammenfassung**

Dämmstoff (1) zum Einblasen in einen Hohlraum (5) eines Bauelementes (2), wobei der Dämmstoff (1) Schafwolle und, insbesondere zerkleinertes, Holzmaterial aufweist, wobei der Anteil der Schafwolle zwischen 20 Gew.% und 35 Gew.% und der Anteil des Holzmaterials zwischen 65 Gew.% und 80 Gew.% beträgt.

## Beschreibung

Die vorliegende Erfindung bezieht sich auf einen Dämmstoff zum Einblasen in einen Hohlraum eines Bauelementes, wobei der Dämmstoff Schafwolle und, insbesondere zerkleinertes, Holzmaterial aufweist.

Im Weiteren betrifft die Erfindung die Verwendung eines Dämmstoffes der zu beschreibenden Art zum Einblasen in Hohlräumen von, vorzugsweise aus Riegelbauweise hergestellten, Bauelementen.

Ferner bezieht sich die Erfindung auf ein Bauelement für Bauzwecke mit einer Innenwand und einer Außenwand, zwischen denen wenigstens ein Hohlraum gebildet ist, wobei der Hohlraum mit einem Dämmstoff der zu beschreibenden Art befüllt ist.

Die Herstellung von Wärme- oder Schalldämmungen durch Einblasen eines Dämmstoffes in Hohlräumen von Bauwerken ist bereits bekannt. Dabei wird ein rieselfähiger bzw. schüttfähiger Dämmstoff aus einem Vorratsbehälter entnommen und über eine Transportleitung unter Zugabe von Druckluft dem zu befüllenden Hohlraum zugeführt. Das Einblasen von Dämmstoffen bietet den besonderen Vorteil, dass der Dämmstoff auch in die verwinkelsten Ecken des Hohlraumes eingebracht werden kann und somit unerwünschte Wärmebrückenbereiche weitgehend vermieden werden können.

Ein einblasbarer Dämmstoff für die Verwendung in Bauelementen sowie ein Verfahren zur Herstellung eines solchen Dämmstoffes ist beispielsweise in der DE 101 24 467 B4 beschrieben. Der Dämmstoff weist Schafwolle und Hanffasern als zwingende Komponenten auf, wobei die Hanffasern teilweise auch durch Holzfasern bzw. Holzspäne ersetzt werden können. Die Verwendung von Hanffasern hat den Nachteil, dass diese nur in Bereichen mit geringer Druckbelastung verbaut werden können. Zudem ist es nachteilig, dass sich Hanffasern bei eindringender Feuchtigkeit zu zersetzen beginnen. Dies führt letztlich dazu, dass der eingeblasene Dämmstoff mit der Zeit starken Setzungen unterworfen ist, wodurch der erforderliche Wärmeschutz nicht mehr gewährleistet ist.
Als Hauptproblem beim Stand der Technik ist zunächst die ungenügende Setzungssicherheit des eingeblasenen Dämmstoffes zu nennen. Die heute am Markt erhältlichen Einblasdämmstoffe mit Holzspänen können eine zuverlässige Setzungssicherheit nur bis zu einer beschränkten Hohlraumtiefe von maximal 20 cm gewährleisten. Die immer strenger werdenden Wärmeschutzanforderungen sollen allerdings auch gedämmte Wandstärken von 24 cm und mehr ermöglichen. Darüber hinaus sind zur Verarbeitung der Schafwolle Spezialmaschinen erforderlich, da es aufgrund der Wollfaserlänge immer wieder zu Verfilzungen und anderen Verarbeitungsproblemen kommt. Darüber werden den Dämmstoffen zum Zweck des Brandschutzes häufig Bor-oder Ammoniumverbindungen zugegeben, was aus Gründen der Gesundheit und der Umweltverträglichkeit nicht unumstritten ist.

Aufgabe der vorliegenden Erfindung ist es, einen Dämmstoff der eingangs erwähnten Gattung vorzuschlagen, der wirtschaftlich herstellbar und überdies ein geringes Setzungsverhalten aufweist.

Dies wird erfindungsgemäß durch die Merkmale des Patentanspruchs 1 gelöst. Weitere vorteilhafte Ausgestaltungen der Erfindung sind in den Unteransprüchen angegeben.

Gemäß der Erfindung ist also vorgesehen, dass der Anteil der Schafwolle zwischen 20 Gew.% und 35 Gew.% und der Anteil des Holzmaterials zwischen 65 Gew.% und 80 Gew.% beträgt.

Der Anmelder hat im Rahmen umfangreicher Versuche festgestellt, dass ein Dämmstoff mit den oben angeführten Massenanteilen von Schafwolle und Holzmaterial einen überaus geringen Setzungsfaktor, eine geringe Wärmeleitfähigkeit und überdies hydrophobe Eigenschaften aufweist.

Zur Sicherstellung der erforderlichen Eigenschaften ist es günstig, wenn der im Hohlraum angeordnete Dämmstoff eine Schüttdichte von mindestens 50 Kilogramm pro Kubikmeter, vorzugsweise mindestens 70 Kilogramm pro Kubikmeter, aufweist. Zumindest im letzteren Fall kann ein Brandverhalten des Dämmstoffes unter Bezugnahme auf die Euroklasse D oder E nach der ÖNORM EN 13501-1 sichergestellt werden. Auf die Zugabe von problematischen Bor-oder Ammoniumverbindungen kann also grundsätzlich verzichtet werden. Allerdings kann - falls erforderlich - der Schafwolle (insbesondere bei einem Waschvorgang bzw. vor Vermischen mit dem Holzmaterial) auch ein Mottenschutzmittel (beispielsweise Naturkautschukmilch, Eisenoxid, Kalk, Tonerde oder ein Harnstoffderivat) zugesetzt werden, was zusätzlich brandhemmend wirkt.

Als Mottenschutz bzw. Brandschutz kann auch das bei Schafwollprodukten häufig verwendete Kaliumhexyfluortitanat (K₂TiF₆) eingesetzt werden, welches nach fachgerechter Aufbringung permanent an die Wollfaser gebunden werden kann. Vorzugsweise ist vorgesehen, dass auch das Holzmaterial vor dem Vermischen mit der Schafwolle von weniger als 3 Gew.% mit diesem Mittel behandelt wird, wobei jedoch das Gesamtprodukt insgesamt lediglich Zusatzstoffe im Gesamtausmaß von etwa 3 Gew.% aufweist. Auf diese Weise ist es möglich, dass ausschließlich über die vorstehend genannten Mittel (d.h. ohne die sonst üblichen Ammoniumphosphat- oder Borverbindungen) ein ausreichender Brandschutz im fertigen Produkt erreicht wird.

Vorzugsweise ist vorgesehen, dass der Dämmstoff mindestens 25 Gew.% Schafwolle enthält.

Besonders günstige Ergebnisse werden dadurch erreicht, indem der Anteil der Schafwolle etwa 25 Gew.% und der Anteil des Holzmaterials etwa 75 Gew.% beträgt. Bei diesem Mischungsverhältnis weist sich der Dämmstoff überaus geringe Wasseraufnahmeeigenschaften, eine geringe Wärmeleitfähigkeit sowie einen niedrigen Setzungsfaktor auf.

Der Dämmstoff kann - bis auf Zusatzstoffe im Gesamtausmaß von weniger als 3 Gew.% - ausschließlich aus Schafwolle und Holzmaterial bestehen. Auf diese Weise ist ein besonders kostengünstiger Dämmstoff herzustellen, da zerkleinertes Holzmaterial in Sägewerken und auch Schafwolle als nachwachsender Rohstoff in großen Mengen zur Verfügung steht.

Besonders günstige Ergebnisse können beispielsweise dadurch erreicht werden, wenn das Holzmaterial in einer aus Schafwolle gebildeten Matrix (also in einem aus feinem Schafwollgewebe gebildeten Gerüstgitter) eingebettet ist. Beispielhafte Verfahrensschritte werden im Folgenden erläutert:
Die Schafwolle wird zunächst gewaschen (vorzugsweise ausschließlich mit Seife und Soda, Wollfettrestgehalt zwischen 0,5% und maximal 0,8%) und kann gegebenenfalls gegen Schädlingsbefall chemisch (insbesondere mit Motten-und/oder Flammschutzmittel) vorbehandelt werden. Wenn die Schafwolle zu stark verpresst ist, so ist diese als Matrix für das Holzmaterial weitgehend ungeeignet, da sie bei gleichem Gewicht um einiges weniger an Volumen einnimmt und dadurch schlecht mit dem Holzmaterial vermischbar ist. Stattdessen werden die eng miteinander verflochtenen Wollfasern der gewaschenen Schafwolle - beispielsweise über eine Wolfmaschine, durch Ziehen über mehrere Kammreichen - gelockert bzw. zerfasert, wodurch eine wesentlich größere Oberfläche generierbar ist. Die gewolften Schafwollfasern werden in einem nachfolgenden Verfahrensschritt einer Kardiermaschine zugeführt, durch welche die zerfaserte Schafwolle zu einem gleichmäßig verteilten, lockeren Vlies verarbeitet wird. Anschließend gelangt dieses Vlies über mehrere Feinwalzen zum Haupttambour, einer großen Trommel. Hier wird die Schafwolle verstreckt, gewendet und wird als hauchdünnes Vlies aufgewickelt. Anschließend wird das auf der Trommel aufgewickelte Vlies abgenommen und am Fließband eines Luftstromverwirblers auf mehreren Metern ausgerollt, woraufhin das zerkleinerte Holzmaterial entsprechend dem gewünschten Mischungsverhältnis gleichmäßig über die Schafwolle gestreut wird, um bereits im ersten Durchlauf eine möglichst gute Homogenisierung des Dämmstoffes zu erreichen. Über ein Gebläse wird das Holzmaterial in das Innere des Schafwollvlieses eingesaugt und das Vlies zerstückelt, wobei die Schafwollfasern voluminös bleiben. Das Holzmaterial kann sich also in eine Art Schafwollmatrix betten, welche das Holzmaterial umklammert und ein Durchrieseln der Holzanteile verhindert. Zur weiteren Homogenisierung kann das Vlies mit dem eingebetteten Holzmaterial ein zweites Mal in den Luftstromverwirbler eingesaugt werden.

Das Holzmaterial kann zumindest teilweise aus Holzfasern, Holzspänen und/oder Hobelspänen gebildet sein. Das in die Schafwolle eingebettete Holzmaterial kann dabei eine Spangröße zwischen 3 mm und 20 mm, vorzugsweise maximal 12 mm, aufweisen.

Zum Einblasen des Dämmstoffes in den Hohlraum ist es darüber hinaus vorteilhaft, wenn die Schafwolle ebenfalls relativ kurzfaserig ausgebildet ist. Vorzugsweise kann die Länge der Schafwollfasern zwischen 5 mm und 15 mm, vorzugsweise maximal 10 mm, betragen.

Das Holzmaterial kann, vorzugsweise ausschließlich, aus Nadelholz bzw. Nadelhölzern (Fichtenholz, Tannenholz, Zirbenholz und/oder Lärchenholz) gebildet sein. Die Holzfeuchtigkeit des Holzmaterials kann dabei zwischen 5% und 18% liegen.

Die erfindungsgemäße Verwendung ist dadurch gekennzeichnet, dass ein Dämmstoff der beschriebenen Art in Hohlräumen von, vorzugsweise aus
Riegelbauweise hergestellten, Bauelementen, eingeblasen wird, wobei vorzugsweise vorgesehen ist, dass die Bauelemente in Montagelage vertikal angeordnet sind.

Das erfindungsgemäße Bauelement für Bauzwecke ist dadurch gekennzeichnet, dass das (vorzugsweise vorgefertigte) Bauelement eine Innenwand und eine Außenwand (bei Holzbauelementen sog. Beplankungen) aufweist, zwischen denen wenigstens ein Hohlraum gebildet ist, wobei der wenigstens eine Hohlraum mit einem Dämmstoff der beschriebenen Art befüllt ist.

Zur Bestimmung des Schafwollanteiles und des Holzmaterialanteiles kann beispielsweise das zu untersuchende Dämmstoffgut über eine Dosier- oder Wiegevorrichtung einem Luftstromwirbler zugeführt werden, in welchem dieses Gut mittels Luftstromsichtung in zwei Fraktionen zerlegt wird. Anschließend können die separierten Anteile jeweils über eine Wiegevorrichtung gewichtsmäßig ermittelt werden.

Weitere Einzelheiten und Vorteile der vorliegenden Erfindung ergeben sich aus der nachfolgenden Figurenbeschreibung. Dabei zeigt bzw. zeigen:
- Fig.1a, 1b: schematische Darstellungen eines Mauerwerkes bzw. eines Bauelementes mit einer Innenwand und einer Außenwand, wobei jeweils ein zwischen diesen Wänden gebildeter Hohlraum mit Dämmstoff befüllt wird,
- Fig. 2: der im Rahmen eines Praxisversuches ermittelte Verlauf der Schütthöhe in Millimeter auftragen über der Zeit in Stunden von zwei Dämmstoffen mit unterschiedlichen Mischungsverhältnissen.

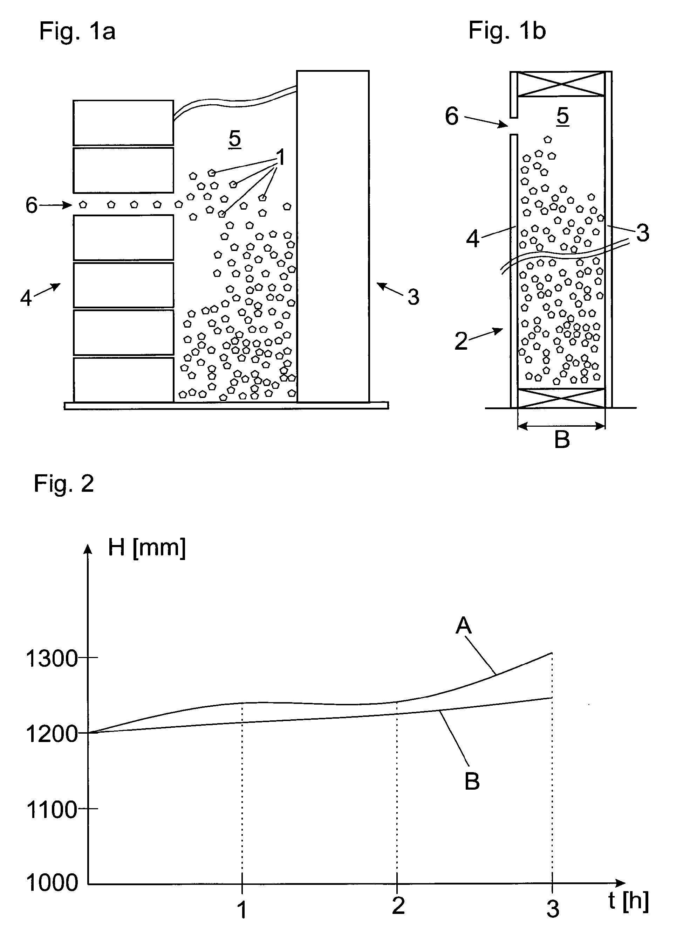

Fig. 1a zeigt stark schematisiert ein Mauerwerk mit einer Innenwand 3 und einer Außenwand 4, zwischen denen ein Hohlraum 5 zur Aufnahme eines Dämmstoffes 1 gebildet ist. Im gezeigten Ausführungsbeispiel wird der Dämmstoff 1 über eine in der Außenwand 4 angeordnete Einblasöffnung 6 in den Hohlraum 5 eingebracht. Das Einblasverfahren eignet sich also insbesondere gut für Altbausanierungen, bei denen in der Außenwand 4 von außen eine Einblasöffnung 6 erstellt wird und der Dämmstoff 1 maschinell im Einblasverfahren in den Hohlraum 5 eingebracht wird. Der vorgeschlagene Dämmstoff 1 ist somit auch zur Kerndämmung von zweischaligem Mauerwerk geeignet, wobei der verbleibende Luftraum zwischen Innenwand 3 und Außenwand 4 mit Dämmstoff 1 ausfüllbar ist. Nachdem der Hohlraum 5 mit Dämmstoff befüllt ist, wird die Einblasöffnung 6 wieder abgeschlossen bzw. abgeklebt.

Fig. 1b zeigt ein Bauelement 2, welches mit Dämmstoff 1 befüllt wird. Das Bauelement 2 umfasst eine Innenwand 3 und eine Außenwand 4, welche im Wesentlichen parallel zueinander verlaufen. Vorzugsweise beträgt der lichte Abstand (B) zwischen Innenwand 3 und Außenwand 4 mehr als 20 cm, vorzugsweise mehr als 24 cm. Das Einblasen des Dämmstoffes 1 kann entweder direkt auf der Baustelle vor Ort aber auch bereits im Werk erfolgen, sodass das Bauelement 2 als vorkonfektioniertes Wand- oder Deckenelement auslieferbar ist. Im fertig eingebauten Zustand weist der Dämmstoff 1 ein Raumgewicht von wenigstens 50 kg/m³, vorzugsweise wenigstens 70 kg/m³, auf. Das Bauelement 2 kann auch bereits installierte Rohinstallationen (beispielsweise Einrichtungen und/oder Rohre für Gas, Wasser, Heizung und/oder Stromversorgung) umfassen, wobei sämtliche verbleibenden Zwischenräume durch den Dämmstoff 1 im Wesentlichen vollständig ausfüllbar sind. Die Innenwand 3 und/oder die Außenwand 4 kann massiv aus Beton, Ziegel, Stein oder alternativ aus einer Leichtbaukonstruktion (insbesondere aus einem Holzmaterial) gebildet sein. Der vorgeschlagene Dämmstoff 1 eignet sich insbesondere auch für Hohlraumbreiten (lichter Abstand (B) zwischen Innenwand 3 und Außenwand 4) von größer als 24 cm, wobei eine ausreichende Setzungssicherheit und ein Einblasen des Dämmstoffes 1 mit üblichen Standardmaschinen problemlos möglich ist.

Fig. 2 zeigt schematisch den Verlauf der Schütthöhe (H) in Millimeter aufgetragen über der Zeit (t) in Stunden. Im Rahmen eines in einem Prüflabor durchgeführten Praxisversuches wurden auf einem Rütteltisch, der mit verschiedenen Amplituden gefahren werden kann, Röhren mit 200 mm Durchmesser montiert, die mit Dämmstoff 1 befüllt wurden. Ausgangsbasis für die Messungen ist jeweils ein Dämmstoff 1 mit einer Ausgangshöhe von 1200 mm und einer Schüttdichte von 70 kg pro Kubikmeter, wobei die Kurve A einen Dämmstoff 1 mit einem Anteil an Schafwolle von 25 Gew.% und einem Anteil des Holzmaterials von 75 Gew.% visualisiert. Die Kurve B beschreibt hingegen einen Dämmstoff 1 mit einem Anteil an Schafwolle von 15 Gew.% und einem Holzmaterialanteil von 85 Gew.%. Dabei hat sich erstaunliches gezeigt, nämlich dass die Höhe (H) des Dämmstoffs 1 mit fortdauerndem Rütteln sogar zunimmt, d.h. nach oben ausdehnt. Der Dämmstoff A mit der 75/25 Mischung gemäß der Kurve A weist nach einer Stunde Rüttelzeit eine Höhe von 1240 mm auf, nach zwei Stunden ebenfalls eine Höhe von 1240 mm und nach drei Stunden Rüttelzeit sogar eine Höhe von 1305 mm. Der Dämmstoff 1 mit der 15/85-Mischung gemäß Kurve B weist nach einer Stunde Rüttelzeit eine Höhe von 1215 mm, nach zwei Stunden 1220 mm und nach drei Stunden Rüttelzeit eine Höhe von 1245 mm auf. Eine Setzung des Dämmstoffes 1 kann also aufgrund der viskoelastischen Eigenschaften der Schafwolle in der Funktion als Matrix praktisch ausgeschlossen werden. Durch die natürlichen Eigenschaften der Schafwolle, wie Kräuselung, Elastizität, Festigkeit und Feinheit in Kombination mit einer Matrix kann eine dauerhafte Formstabilität ohne ein Zusammensacken des Dämmstoffes 1 ermöglicht werden. Auch ein Durchrieseln des Holzmaterials konnte bei beiden Mischungsvarianten nicht bestätigt werden.

Die Verwendung von Schafwolle als Dämmstoffanteil weist einige Vorzüge auf, sie wirkt beispielsweise luftreinigend, feuchtigkeitsregulierend und schadstoffbindend (absorbiert Formaldehyd) und trägt so zur Verbesserung der Luft bzw. des Klimas in Räumen bei. Auch das Holzmaterial wirkt feuchtigkeitsregulierend, speichert CO₂, ist für die Speichermasse (Gewicht) des Dämmstoffes zuständig und ist aus ökologischer Sicht wohl der wertvollste Baustoff. Holz ist ein nachwachsender Rohstoff, das für den Dämmstoff verwendete Holzmaterial fällt in der Holzverarbeitungsindustrie in großen Mengen als Nebenprodukt an, welches gegebenenfalls nach Selektion von Form und Größe als Basismaterial für den erfindungsgemäßen Dämmstoff verwendet werden kann.

## Patentansprüche

1. Dämmstoff (1) zum Einblasen in einen Hohlraum (5) eines Bauelementes (2), wobei der Dämmstoff (1) Schafwolle und, insbesondere zerkleinertes, Holzmaterial aufweist, **dadurch gekennzeichnet, dass** der Anteil der Schafwolle zwischen 20 Gew.% und 35 Gew.% und der Anteil des Holzmaterials zwischen 65 Gew.% und 80 Gew.% beträgt.

2. Dämmstoff nach Anspruch 1, dass der Dämmstoff (1) mindestens 25 Gew.% Schafwolle enthält.

3. Dämmstoff nach Anspruch 1, dass der Anteil der Schafwolle etwa 25 Gew.% und der Anteil des Holzmaterials etwa 75 Gew.% beträgt.

4. Dämmstoff nach einem der Ansprüche 1 bis 3, **dadurch gekennzeichnet, dass** der Dämmstoff (1) - bis auf Zusatzstoffe im Gesamtausmaß von weniger als 3 Gew.% - ausschließlich aus Schafwolle und Holzmaterial besteht.

5. Dämmstoff nach einem der Ansprüche 1 bis 4, **dadurch gekennzeichnet, dass** das Holzmaterial in einer aus Schafwolle gebildeten Matrix eingebettet ist.

6. Dämmstoff nach einem der Ansprüche 1 bis 5, **dadurch gekennzeichnet, dass** das Holzmaterial zumindest teilweise aus Holzfasern, Holzspänen und/oder Hobelspänen gebildet ist.

7. Dämmstoff nach einem der Ansprüche 1 bis 6, **dadurch gekennzeichnet, dass** das Holzmaterial eine Spangröße zwischen 3 mm und 20 mm, vorzugsweise maximal 12 mm, aufweist.

8. Dämmstoff nach einem der Ansprüche 1 bis 7, **dadurch gekennzeichnet, dass** das Holzmaterial, vorzugsweise ausschließlich, aus Nadelholz oder Nadelhölzern gebildet ist.

9. Dämmstoff nach Anspruch 8, **dadurch gekennzeichnet, dass** das Nadelholz oder Nadelhölzer aus Fichtenholz, Tannenholz, Zirbenholz und/oder Lärchenholz gebildet ist bzw. sind.

10. Dämmstoff nach einem der Ansprüche 1 bis 9, **dadurch gekennzeichnet, dass** die Holzfeuchtigkeit des Holzmaterials zwischen 5% und 18% liegt.

11. Verwendung eines Dämmstoffes nach einem der Ansprüche 1 bis 10 zum Einblasen in Hohlräumen (5) von, vorzugsweise aus Riegelbauweise hergestellten, Bauelementen (2), wobei vorzugsweise vorgesehen ist, dass die Bauelemente (2) in Montagelage vertikal angeordnet sind.

12. Bauelement (2) für Bauzwecke mit einer Innenwand (3) und einer Außenwand (4), zwischen denen wenigstens ein Hohlraum (5) gebildet ist, wobei der wenigstens eine Hohlraum (5) mit einem Dämmstoff (1) nach einem der Ansprüche 1 bis 10 befüllt ist.

13. Bauelement nach Anspruch 12, **dadurch gekennzeichnet, dass** die Innenwand (3) und die Außenwand (4) im Wesentlichen parallel zueinander verlaufen und wenigstens 20 cm voneinander beabstandet sind.

14. Bauelement nach Anspruch 12 oder 13, **dadurch gekennzeichnet, dass** der im Hohlraum (5) angeordnete Dämmstoff (1) eine Schüttdichte von mindestens 50 Kilogramm pro Kubikmeter, vorzugsweise mindestens 70 Kilogramm pro Kubikmeter, aufweist.
